(19) **Europäisches Patentamt / European Patent Office / Office européen des brevets**

(11) **EP 1 905 859 B1**

(12) **EUROPEAN PATENT SPECIFICATION**

(45) Date of publication and mention of the grant of the patent:
**18.04.2012 Bulletin 2012/16**

(51) Int Cl.:
*C23C 2/08* (2006.01)   *C22C 18/00* (2006.01)
*C22C 38/00* (2006.01)   *C22C 38/14* (2006.01)
*C23C 2/02* (2006.01)   *G01N 25/20* (2006.01)

(21) Application number: **06767900.1**

(22) Date of filing: **05.07.2006**

(86) International application number:
**PCT/JP2006/313394**

(87) International publication number:
**WO 2007/004671 (11.01.2007 Gazette 2007/02)**

(54) **HOT-DIP Sn-Zn SYSTEM COATED STEEL SHEET HAVING GOOD CORROSION RESISTANCE**

NACH DEM HEISSTAUCHVERFAHREN MIT EINEM SN-ZN-SYSTEM BESCHICHTETES STAHLBLECH MIT GUTER KORROSIONSBESTÄNDIGKEIT

FEUILLE D'ACIER REVETUE A SYSTEME SN-ZN D'IMMERSION A CHAUD PRESENTANT UNE BONNE RESISTANCE A LA CORROSION

(84) Designated Contracting States:
**DE FR GB TR**

(30) Priority: **05.07.2005 JP 2005196192**

(43) Date of publication of application:
**02.04.2008 Bulletin 2008/14**

(73) Proprietor: **Nippon Steel Corporation Tokyo 100-8071 (JP)**

(72) Inventors:
• **GOTO, Yasuto**
  **c/o NIPPON STEEL CORPORATION,**
  **YAWATA WORKS**
  **Kitakyushu-shi,**
  **Fukuoka 8048501 (JP)**
• **KUROSAKI, Masao**
  **c/o NIPPON STEEL CORPORATION,**
  **YAWATA WORKS**
  **Kitakyushu-shi,**
  **Fukuoka 8048501 (JP)**
• **MIZUGUCHI, Toshinori**
  **c/o NIPPON STEEL CORPORATION,**
  **YAWATA WORKS**
  **Kitakyushu-shi,**
  **Fukuoka 8048501 (JP)**
• **YAMAGUCHI, Shinichi**
  **c/o NIPPON STEEL CORPORATION**
  **Tokyo 100-8071 (JP)**

(74) Representative: **Vossius & Partner**
  **Siebertstrasse 4**
  **81675 München (DE)**

(56) References cited:
EP-A- 0 763 608      EP-A- 1 477 582
EP-A- 1 561 835      WO-A-2005/080635
JP-A- 2002 332 556   JP-A- 2004 131 819
JP-A- 2004 131 819   JP-A- 2004 360 019
JP-A- 2004 360 019

• LIN KWANG-LUNG ET AL: "Electrodeposition of eutectic Sn - Zn alloy by pulse plating", JOURNAL OF MATERIALS RESEARCH, MATERIALS RESEARCH SOCIETY, WARRENDALE, PA, US, vol. 18, no. 9, 1 September 2003 (2003-09-01), pages 2203-2207, XP008129413, ISSN: 0884-2914

## Description

The present invention relates to a method of manufacturing a hot-dip Sn-Zn system coated steel sheet having excellent corrosion resistance, weldability and formability, which is adapted to materials for vehicle fuel tanks, domestic electric appliances, industrial machinery, and the like, and the product made by the method.

In the related art, Pb-Sn alloy coated steel sheets having excellent corrosion resistance, formability, solderability (weldability), and the like have been mainly used for materials for fuel tanks, and have been widely used for vehicle fuel tanks.

Sn-Zn alloy coated steel sheets have been mainly manufactured by means of an electroplating method for electrolyzing a bare steel sheet in an aqueous solution containing Zn and Sn ions, for example as disclosed in Patent Document 1. Sn-Zn alloy coated steel sheets having Sn as a main component have been widely used for electronic parts due to their excellent corrosion resistance and solderability. These Sn-Zn alloy coated steel sheets have been known to have excellent properties for use in vehicle fuel tanks, and hot-dip Sn-Zn system coated steel sheets were disclosed in the following Patent Documents 2 to 4.

Although Pb-Sn alloy coated steel sheets have been widely used for materials for vehicle fuel tanks due to their excellent properties (for example, formability, corrosion resistance, solderability, seam weldability, and the like), things are trending toward Pb-free with recent increase of recognition for the global environment.

Sn-Zn electric alloy coated steel sheets have been used for electronic parts mainly requiring solderability under low corrosive environments.

The above-mentioned hot-dip Sn-Zn system coated steel sheets have reliably excellent corrosion resistance, formability and solderability. However, there is a recent need to further improve corrosion resistance. In some cases, pitting corrosion due to Zn segregation occurs even in a not-processed flat portion of a Sn-Zn system coated steel sheet. In particularly, as it takes a short time to produce red rust in a salt spray test under salt-damaged environments, it cannot be said that there is sufficient corrosion resistance in salt-damaged environments. The addition amount of Zn may increase to further improve a sacrificial corrosion resistance effect. However, if the addition amount of Zn is excessive, a main component of a coating layer transitions from Sn to Zn, and thus, Zn is eluted even more than Sn, which may result in deterioration of corrosion resistance of the coating layer.

(Patent Document 1) Japanese Patent Application, Publication No. S52-130438
(Patent Document 2) Japanese Patent No. 3126622
(Patent Document 3) Japanese Patent No. 3126623
(Patent Document 4) PCT International Publication WO 96/30560

Kwang-Lung Lin et al., J. Mater. Res., Vol. 18, No. 9, Sep 2003, pp. 2203-2207, disclose an electrodeposition of eutectic Sn-Zn alloy by pulse plating. The melting temperature of the deposit was measured with differential scanning calorimetry (DSC).

It is an object of the invention to overcome the above problems and provide a hot-dip Sn-Zn system coated steel sheet having excellent corrosion resistance, formability, and weldability with good balance therebetween, without using Pb.

A hot-dip Sn-Zn coating microstructure is likely to become a solidified microstructure having a mixture of Sn primary crystals and binary Sn-Zn eutectic cells, and Zn from which corrosion starts is likely to be segregated in an eutectic crystal cell-eutectic crystal cell grain boundary. Thus, many studies have been made to suppress growth of eutectic crystal cells while actively growing Sn primary crystals. As a result, it has been discovered that a coating layer having sufficiently cryslallized Sn primary crystals and a coating layer having grown Sn-Zn eutectic cells show respective unique melting behavior and an endothermic value of melting heat generated by Sn primary crystals shows a unique melting behavior in a thermal analysis.

This discovery leads to the spirit of the invention that the Zn segregation is alleviated by adjusting the ratio of an endothermic value of melting heat generated by Sn primary crystals and an endothermic value of melting heat generated by Sn-Zn eutectic crystals in a specified region.

The object of the present invention above can be achieved by the features specified in the claims.

The hot-dip Sn-Zn system coated steel sheets of the present invention are useful as a Pb-free rust prevention steel sheet for a fuel tank, which has excellent corrosion resistance, formability and weldability and further long-term durability against deteriorated gasoline and the like. Accordingly, the hot-dip Sn-Zn system coated steel sheets have properties appropriate for materials for fuel tanks without using Pb.

The invention is described in detail in conjunction with the drawings, in which:

FIG 1 is a graph showing a differential scanning calorimetric curve of a coating layer according to the present invention, and

FIG. 2 is a graph showing a differential scanning calorimetric curve of a coating layer according to a comparative example, wherein reference signs "a" and "b" are a temperature of an endothermic peak of Sn-Zn eutectic crystals and a temperature of an endothermic peak temperature of Sn primary crystals, respectively.

Hereinafter, the present invention will be described in detail.

A hot-dip Sn-Zn system coated steel sheet in accordance with an embodiment of the present invention includes a steel sheet and a hot-dip coating layer formed on a surface of the steel sheet. Examples of the steel sheet may include an annealed steel sheet or a rolled material, and the annealed steel sheet is obtained by subjecting a steel casting to a series of processes including hot rolling, acid prickling, cold rolling, annealing, temper rolling, and the like. The steel sheet is required to have components to allow a fuel tank to be processed into a complicated shape, allow an alloy layer at a steel-coating layer interface to be made thin, allow a coating to be prevented from being peeled off, and allow corrosions inside a fuel tank and in external environments to be prevented from advancing. In particular, since the fuel tank is a portion requiring a high level of formability, it is preferable to apply an IF (interstitial atom free) steel having excellent formability, and it is also preferable to use a steel sheet added with several ppm of B in order to secure a weld airtight property, secondary formability, and the like. Typically, components of the IF steel preferably have the following range: C ≤ 0.003 mass %, Si < 0.01 mass %, Mn: 0.10 mass % to 0.20 mass %, P < 0.025 mass %, S: 0.005 mass % to 0.02 mass %, Ti: 0.040 mass % to 0.060 mass %, and the remainder: Fe and inevitable impurities. Additionally the IF steel more preferably contains about 5 ppm of B. For example, the IF steel may contain the following components: C: 0.003 mass %, Si: 0.01 mass %, Mn: 0.20 mass %, P: 0.01 mass %, S: 0.01 mass %, Ti: 0.06 mass %, and the remainder: Fe and inevitable impurities. In the hot rolling, a slab is heated at about 1150°C, and then is hot-rolled to about 3 to 6 mm. And then, a rolled steel is subjected to acid pickling, and thereafter cold rolling to about 0.5 to 1.5 mm. Next, rolling oil, iron powder and the like on a surface thereof are removed by alkaline electrolysis, and then the rolled steel is annealed. The annealing is preferably continuous annealing considering the cost aspect, but may also be batch annealing. Thereafter, the rolled steel is subjected to temper rolling, preliminary hot-dip coating of an Fe-Ni alloy, and hot-dip coating by a plating method which is generally called a flux method.

In the present invention, Sn-Zn alloy coating is basically formed by a hot-dip coating method. The prime reason for employing the hot-dip coating method is to secure sufficient coating weight. An electroplating method is uneconomical although it can secure sufficient coating weight through long electrolysis. In the present embodiment, the range of target coating weight is 10 to 150 g/m$^2$ (single surface side), which is a relatively heavy coating weight region. Therefore, the hot-dip coating method is preferred. In addition, since it is difficult to properly control composition of the Sn-Zn alloy if a potential difference between coating elements is large, the hot-dip coating method is most preferably used for the Sn-Zn alloy.

The hot-dip Sn-Zn coating layer contains 1 to 8.8 mass % of Zn and the remainder including 91.2 to 99.0 mass % of Sn and inevitable impurities. Zn in the coating composition is limited in consideration of a balance of corrosion resistance in the inner and outer surfaces of a fuel tank. The outer surface of the fuel tank requires full rust prevention capability, and thus is coated with paint after the fuel tank is shaped. Accordingly, painting thickness has an effect on the rust prevention capability; however, with regard to the coating material, the corrosion resistance effect of a coating layer restrains the occurrence of red rust. In particular, the corrosion resistance effect of the coating layer is very important for a portion which is not well coated. The potential of the coating layer is lowered by addition of Zn to Sn-based coating; thereby, sacrificial corrosion resistance capability is given to the coating layer. To do so, addition of 1 mass % or more of Zn is required. Excessive addition of more than 8.8 mass % of Zn, which corresponds to a binary Sn-Zn eutectic point, increases the melting point; thereby promoting growth of coarse Zn crystals. This causes an intermetallic compound layer (so-called alloy layer) of a coating underlying layer to be excessively grown. For this reason, the content of Zn has to be 8.8 mass % or less. Although the coarse Zn crystals have no problem in that the sacrificial corrosion resistance capability of Zn can be still shown, selective corrosion is likely to occur in the coarse Zn crystals. In addition, since the intermetallic compound is very brittle, coating cracks are likely to occur in press forming due to growth of the intermetallic compound layer of the coating underlying layer, which may result in deterioration of the corrosion resistance effect of the coating layer.

On the other hand, corrosion in the inner surface of the fuel tank does not become a problem for only normal gasoline. However, there is a possibility that the inner surface of the fuel tank may be exposed to a severe corrosion environment due to mixture of water or chlorine ions into gasoline, generation of organic carboxylic acid produced by oxidative deterioration of gasoline, and the like. If gasoline leaks out of the fuel tank due to perforated corrosion, it may lead to a serious accident, and thus it is necessary to completely prevent the inner surface of the fuel tank from being corroded. Deteriorated gasoline containing the above-mentioned corrosion promoting components was produced, and properties under various conditions were examined. As a results, it was revealed that a Sn-Zn alloy coating which contains 8.8 mass % or less of Zn has excellent corrosion resistance.

If the coating layer contains only Sn with no Zn or contains Sn and less than 1 mass % of Zn, the coating layer does not have sacrificial corrosion resistance capability for a bare steel sheet (material to be coated) from an initial stage when the coating layer is exposed to a corrosion environment. For this reason, the inner surface of the fuel tank has a problem of pitting corrosion at a coated pin hole portion and the outer surface of the fuel tank has a problem of early occurrence of red rust.

On the other hand, if the coating layer contains more than 8.8 mass % of Zn, Zn is first melted, thereby producing a plurality of corrosion products in a short time. This may cause clogging of a carburetor for an engine when the hot-dip Sn-Zn system coated steel sheet is used for the fuel tank. In addition, from the aspect of performance except for corrosion resistance, as the content of Zn increases, formability of the coating layer becomes deteriorated, thereby deteriorating press formability which is a characteristic of Sn-based coating. In addition, with increase of the content of Zn, solderability becomes significantly deteriorated due to Zn oxides and rising of the melting point of the coating layer.

Accordingly, in the present embodiment, the content of Zn in the Sn-Zn alloy coating is preferably 1 to 8.8 mass %, and is more preferably 4.0 to 8.8 mass % to obtain a more sufficient sacrificial corrosion resistance effect.

Next, melting behavior of the coating layer will be described. Melting behavior is the most important factor in the present invention and is defined by a balance of corrosion resistance in the inner surface and the outer surface of the fuel tank and manufacturability.

In the present embodiment, the ratio of an endothermic value of melting heat generated by the Sn-Zn eutectic crystals and an endothermic value of melting heat generated by the Sn primary crystals in the hot-dip coating layer satisfies the following formula:

$$\frac{\text{(endothermic value of melting heat generated by Sn primary crystals)}}{\{\text{(endothermic value of melting heat generated by Sn primary crystals)} + \text{(endothermic value of melting heat generated by Sn-Zn eutectic crystals)}\}} \geq 0.3$$

The reason for such definition of the endothermic value ratio is that a microstructure of the Sn-Zn coating layer greatly changes at the boundary of (endothermic value of melting heat generated by Sn primary crystals) / {(endothermic value of melting heat generated by Sn primary crystals) + (endothermic value of melting heat generated by Sn-Zn eutectic crystals)} = 0.3.

In a coating microstructure showing thermal analysis behavior of (endothermic value of melting heat generated by Sn primary crystals) / {(endothermic value of melting heat generated by Sn primary crystals) + (endothermic value of melting heat generated by Sn-Zn eutectic crystals)} < 0.3, Sn-Zn eutectic crystal cells are grown over the entire surface, and it is likely to produce Zn segregation passing through the coating layer in a depth direction in a Sn-Zn eutectic crystal cell-eutectic crystal cell grain boundary.

On the other hand, in a coating microstructure showing thermal analysis behavior of (endothermic value of melting heat generated by Sn primary crystals) / {(endothermic value of melting heat generated by Sn primary crystals) + (endothermic value of melting heat generated by Sn-Zn eutectic crystals)} ≥ 0.3, Sn primary crystals of which the amount is sufficient to suppress Sn-Zn eutectic crystal cells from being solidified are crystallized out. This allows Zn segregation to be significantly decreased. As a result, corrosion resistance of the coating layer is rapidly enhanced. From the above description, in the binary Sn-Zn alloy composition constituting the hot-dip coating layer of the present embodiment, the ratio of the endothermic value of melting heat generated by the Sn-Zn eutectic crystals and the endothermic value of melting heat generated by the Sn primary crystals is defined by the following formula:

$$\frac{\text{(endothermic value of melting heat generated by Sn primary crystals)}}{\{\text{(endothermic value of melting heat generated by Sn primary crystals)} + \text{(endothermic value of melting heat generated by Sn-Zn eutectic crystals)}\}} \geq 0.3$$

The reason for such definition of the endothermic value ratio will be hereinafter described in more detail.

As described above, sacrificial corrosion resistance capability is given to the coating layer by containing Zn in the Sn-based coating of the hot-dip coating layer. This effect is used to control corrosion in the inner and outer surfaces of a fuel tank. However, in a corrosion environment, since Zn is inherently eluted at a high speed, if Zn segregated portions exist in the coating layer, theses portions are preferentially eluted, and thus, holes are likely to be formed by perforated corrosion at the Zn segregated portions.

In the range of composition of the hot-dip coating layer of the present embodiment, the hot-dip Sn-Zn coating microstructure is likely to become a solidified microstructure having a mixture of Sn primary crystals and binary Sn-Zn eutectic cells, and at this time, Zn is likely to be segregated in the eutectic crystal cell-eutectic crystal cell grain boundary. Although the reason for high possibility of Zn segregation in the eutectic crystal cell-eutectic crystal cell grain boundary is not apparent, the reason may be assumed as follows:

(a) effect of a small quantity of impurities having high affinity with Zn;
(b) that an eutectic crystal microstructure in an eutectic crystal cell-eutectic crystal cell grain boundary of a final solidified portion is likely to become coarse; and
(c) that, since Zn is an antecedent phase of Sn-Zn eutectic crystal solidification, antecedent Zn phases of different eutectic crystal cells in the eutectic crystal cell-eutectic crystal cell grain boundary are bonded together.

Zn segregated in the eutectic crystal cell-eutectic crystal cell grain boundary becomes a starting point of corrosion and is likely to produce selective corrosion, as described above.

It is possible to alleviate such Zn segregation by actively growing Sn primary crystals while suppressing Sn eutectic crystal cells from being grown. Since Sn is crystallized out as primary crystals in the range of composition of the hot-dip coating layer of the present embodiment, when Sn dendrite in the form of a network spreads over the coating layer at an initial solidification stage, binary Sn-Zn eutectic cells grown by an eutectic crystal reaction are suppressed from being further grown due to an arm of the Sn dendrite. Accordingly, large eutectic crystal cells do not collide with each other, and thus no Zn is segregated in the eutectic crystal cell-eutectic crystal cell grain boundary, thereby greatly improving the corrosion resistance of the inner and outer surfaces of the fuel tank.

In order to actively grow the Sn primary crystals, growth starting points (nucleation sites) of Sn may be extended. In the solidification procedure of the hot-dip coating, since much heat is eliminated from the steel sheet side, solidification is progressed from an interface between the coating/bare steel sheet. Accordingly, when minute unevenness is formed on an underlying alloy layer of the hot-dip coating layer or on the bare steel sheet, it is possible to form growth starting points (nucleation sites) of the Sn primary crystal dendrite.

The most effective method for providing nucleation sites is to control the shape of the alloy phase (generated by bare steel sheet and hot-dip metal) of the underlying layer of the hot-dip coating layer. In order to have an effect on the Sn nucleation, minute unevenness is effective and a method for generating the alloy phase may be controlled. That is, sites where the alloy phase is being generated become projections, and sites where the alloy phase is being suppressed become depressions. Such control is possible by controlling hot-dip coating bath temperature, and hot-dip coating immersion time, and if the steel sheet is subjected to pre-coating prior to the hot-dip coating, such control is also possible by further controlling the kind and coating weight of additional pre-coating.

Various factors used to generate the alloy phase will be hereinafter described in detail.

(Kind and Coating Weight of Pre-Coating)

(a) Ni element (outside the scope of the invention)

Sn-Zn metal and Fe (bare steel sheet) are suppressed from being alloyed at sites coated with Ni by pre-coating in the solidification process of the hot-dip coating. On the other hand, Sn-Zn metal and Fe (bare steel sheet) are alloyed at sites not coated with Ni. As a result, an alloy phase having minute unevenness is generated. When the weight of pre-coating falls within a range of 0.01 to 0.3 $g/m^2$ per single surface side, a pre-coating layer is not coated uniformly (having non-coating portions of a micrometer order observable by SEM (about 5000-fold); thereby, the alloy phase having minute unevenness is generated by an alloy phase growth difference as described above. The weight of pre-coating is preferably 0.01 to 0.24 $g/m^2$, more preferably 0.01 to 0.09 $g/m^2$ so as to secure nucleation sites stably. Ni coating is sufficient with a Watt's bath used commonly. For reference, the typical composition of the Watt's bath includes 240 to 350 g/L of nickel sulfate, 30 to 60 g/L of nickel chloride and 30 to 45 g/L of boric acid, and coating conditions are 2.5 to 4.5 of pH, 40 to 60°C of bath temperature, and 2 to 10 $A/dm^2$ of current density.

(b) Fe-Ni alloy

Although overlapping the description regarding the Ni element, the behaviors of alloying of Fe and Ni with Sn-Zn metal appear different from each other. That is, Fe is alloyed with Sn-Zn metal while Ni is suppressed from being alloyed with Sn-Zn metal. As a result, an alloy phase having minute unevenness is generated. Accordingly, pre-coating of the Fe-Ni alloy also provides the same effects. The composition of Fe-Ni alloy pre-coating is optional as long as it is not extremely biased to any one of Fe and Ni. For example, the composition of the pre-coating has no influence in a range of Fe-10 mass %Ni to Fe-80 mass %Ni. The composition of the pre-coating is preferably in a range of Fe-21 mass %Ni to Fe-70 mass %Ni, in which Sn primary crystals can be generated more stably. As an Fe-Ni alloy coating bath, the above-described Ni coating Watt's bath with 30 to 200 g/L of iron sulfate added can be used. Unlike the Ni element, the Fe-Ni alloy need not be ununiformly coated. Therefore, the upper limit of weight of the pre-coating need not be set. However, from an economical standpoint, the weight of the pre-coating is preferably 0.01 to 2.0 g/m$^2$ per single side.

(Hot-dip coating bath temperature and immersion time)

Hot-dip coating bath temperature and immersion time have an effect on growth of the alloy phase.

The alloy phase is not grown if the hot-dip coating bath temperature is too low while being promoted if the hot-dip coating bath temperature is too high. From the standpoint of manufacturability, in many cases, the lower limit of the hot-dip coating bath temperature is set to be liquidus temperature of the hot-dip metal + 10 to 50°C, while its upper limit is set to be the liquidus temperature + 100°C at the most. If the hot-dip coating bath temperature is low, there is a risk of hot-dip metal solidification due to bath temperature irregularity in a hot-dip coating furnace. On the other hand, if the hot-dip coating bath temperature is high, there are disadvantages that the alloy phase is excessively grown, that the solidification is required to be cooled after the hot-dip coating, and that the hot-dip coating is uneconomic. In the Sn-Zn system coating of the hot-dip coating layer of the present embodiment, in consideration of the Sn-Zn composition range, the hot-dip coating bath temperature is preferably in a range of 240 to 300°C, in which it is possible to generate an alloy phase having minute unevenness by a combination of the above-described pre-coating and immersion time which will be described below:

In general, there is a tendency that the alloy phase is insufficiently grown if immersion time is short while being excessively grown if immersion time is long. In the present embodiment, the alloy phase is already grown by an immersion for one second, and the growth of the alloy phase is slowly saturated even with immersion for a long time. In an actual continuous hot-dip coating, the immersion time is at least about 2 seconds. Typically, in consideration of the size of a hot-dip coating furnace, there is no case where the hot-dip coating layer is immersed for 15 seconds or more. A longer immersion time means lower productivity and is uneconomical. When the immersion time is in a range of 2 to 15 seconds, it is possible to generate an alloy phase having minute unevenness by a combination with the above-described pre-coating and the hot-dip coating bath temperature.

(Steel sheet unevenness)

Since unevenness becomes a nucleation site, minute unevenness mechanically formed on the steel sheet has the same effect as the unevenness on the alloy phase. Examples of methods for forming minute unevenness on the steel sheet may include a transfer method using a rolling roll having minute unevenness, a shot blast method using minute rigid powder, and the like.

In addition, with regard to the condition for developing the Sn primary crystals, the effect of a cooling rate after gas wiping performed to control coating weight should also be considered. Although the Sn primary crystals are first solidified in the microstructure having Sn primary crystals and binary Sn-Zn eutectic crystals, it is preferable to decrease the cooling rate to sufficiently develop the Sn primary crystals. When the hot-dip Sn-Zn coating layer is manufactured by a combination with the above-described pre-coating method, the cooling rate of the hot-dip Sn-Zn coating layer is 30°C/sec. or less. The cooling rate is 10°C/sec. or more in actual production, since productivity is lowered if the cooling rate is too low.

The Sn-Zn coating layer having a solidification microstructure in which Sn primary crystals are positively crystallized out as described above shows a unique melting behavior, and a ratio of an endothermic value of melting heat generated by the Sn-Zn eutectic crystals and an endothermic value of melting heat generated by the Sn primary crystals in the hot-dip coating layer satisfies the following formula:

$$\text{(endothermic value of melting heat generated by Sn primary crystals)} / \{\text{(endothermic value of melting heat generated by Sn primary crystals)} + \text{(endothermic value of melting heat generated by Sn-Zn eutectic crystals)}\} \geq 0.3$$

In the present embodiment, with regard to the solidification behavior of the binary Sn-Zn alloy composition of the hot-dip coating layer, the Sn primary crystals are crystallized out in a state of equilibrium. However, in an actual hot-dip Sn-Zn coating process, if the means for positively making the Sn primary crystals crystallize out as described above is not provided, the hot-dip Sn-Zn coating is likely to be overcooled, which may result in a coating microstructure having only Sn-Zn eutectic crystal cells over a wide range of composition from an eutectic crystal point to low Zn mass %. However, through thermal analysis for the coating layer, the present inventors have found that there appears a definite difference in endothermic values of melting heat generated by Sn primary crystals between a coating layer having grown Sn-Zn eutectic crystal cells and a coating layer in which Sn primary crystals are sufficiently crystallized out. By using such difference, it is possible to distinguish between both microstructures. That is, the coating layer having grown Sn-Zn eutectic crystals cells does not nearly show an endothermic value of melting heat generated by Sn primary crystals while mostly showing an endothermic value of melting heat generated by Sn-Zn eutectic crystals.

On the other hand, the coating layer in which Sn primary crystals are sufficiently crystallized out apparently shows an endothermic value of melting heat generated by Sn primary crystals, and since the binary Sn-Zn alloy composition of the hot-dip coating layer of the present embodiment satisfies the following formula, it is identifiable. Accordingly, in the present embodiment, the ratio of the endothermic value of melting heat generated by the Sn-Zn eutectic crystals and the endothermic value of melting heat generated by the Sn primary crystals is defined by the following formula:

(endothermic value of melting heat generated by Sn primary crystals) /

{(endothermic value of melting heat generated by Sn primary crystals) + (endothermic value of melting heat generated by Sn-Zn eutectic crystals)} ≥ 0.3

In addition, in the composition of the hot-dip coating layer of the present embodiment, the temperature of an endothermic peak, b, generated by Sn primary crystals melting is 200°C or higher and 230°C or lower, and the temperature of an endothermic peak, a, generated by Sn-Zn eutectic crystals melting is 198°C or higher and lower than 200°C. Among several methods for examining the melting behavior, through differential scanning calorimetry (DSC) which is one of methods for thermal analysis, the present inventors have found that there is a correlation between the result of thermal analysis by DSC and corrosion resistance of a coating steel sheet. DSC is a method for heating a reference material and a sample simultaneously, adding energy required to cancel a temperature difference between the reference material and the sample, and measuring a temporal variation of the required energy (variation of heat content) and the temperature of the reference material. A differential scanning calorimetric curve obtained by the measurement provides a signal for an endothermic reaction and an exothermic reaction at any temperature (obtains a peak). In this method, since thermal energy is provided as Joule heat of electricity, it is possible to measure the heat of reaction quantitatively.

In the present embodiment, DSC7 (available from PerkinElmer Co., Ltd.) is used as the differential scanning calorimeter. As a sample to be measured, a hot-dip Sn-Zn system coating steel sheet (having thickness of 0.5 mm to 2.0 mm) is punched to have a diameter of 6 mm φ and then sealed in an aluminum pan. The heating rate is typically selected from a range of 2°C/min to 20°C/min. The result of measurement depends on the heating rate. With increase of the heating rate, whole melting behavior is shifted to high temperature, and peak resolution is lowered. However, since variation per hour increases, sensitivity of external appearance is raised, which is advantageous for detection of minute peaks. In addition, since aimed melting behavior may depend on the heating rate, there is a need to make measurements at various heating rates.

In the present embodiment, an efficient and optimal differential scanning calorimetric curve could be obtained at a heating rate of 2.5°C/min. At this heating rate, it is possible to separate an endothermic peak in a range of 198°C or higher to lower than 200°C from an endothermic peak in a range of 200°C or higher to 230°C or lower.

In the present embodiment, the temperature of an endothermic peak indicates the highest temperature of the endothermic peak (peak top temperature) depicted by the differential scanning calorimetric curve. An endothermic value is obtained from an area defined by a baseline and the curve.

In the present embodiment, perfect corrosion resistance is expected to be obtained through a post-treatment of coating a surface of the coating layer with another coating layer containing an inorganic compound, an organic compound or a composite thereof. This treatment is very compatible with the Sn-Zn coating layer and has effects of coating a detective portion such as microscopic pin holes, dissolving the coating layer to restore pin holes, and the like; thereby greatly improving the corrosion resistance.

EXAMPLES

Examples of the present invention will be described hereinafter.

(Example 1) (outside the scope of the invention)

0.8 mm thick annealed and tempered steel sheets were coated with 0.1 g/m$^2$ of Ni (with 50°C of bath temperature and 10A/dm$^2$ of a current density per single surface side) using a Watt's bath (240 g/L of nickel sulfate, 45 g/L of nickel chloride, 30 g/L of boric acid, and pH = 4.0) by an electroplating method. Then, these steel sheet were coated with coating flux containing zinc chloride, ammonium chloride and hydrochloric acid, and then were introduced into Sn-Zn hot-dip coating baths at 280°C. After reacting the coating bath with a surface of the steel sheet for 5 seconds, the steel sheets were drawn out of the coating baths, and then, the coating weight (overall coating weight of Sn + Zn) was controlled to be 40 g/m$^2$ (per single surface side) using a gas wiping method. After the gas wiping, the cooling rate was varied using an air jet cooler to solidify the hot-dip coating layer.

A differential scanning calorimetric curve for the obtained Sn-Zn coating steel sheet was measured using DSC7 (available from PerkinElmer Co., Ltd.). As a sample to be measured, the Sn-Zn coating steel sheet was punched to have a diameter of 6 mm $\phi$ and then was sealed in an aluminum pan. With the heating rate set at 2.5°C/min, measurement of the sample was conducted in a range from normal temperature to 250°C. Temperatures of endothermic peaks, a and b, were obtained from the highest temperatures of the endothermic peaks (peak top temperatures) depicted by the differential scanning calorimetric curve, and endothermic values were obtained from areas defined by a baseline and the curve.

Corrosion resistance of the outer surface of a fuel tank under a salt-damaged environment was evaluated with an area ratio of red rust after SST960 hours. The case in which the area ratio of red rust was 10% or less was evaluated as a good result.

Corrosion resistance of the inner surface of the fuel tank was evaluated as follows. A corrosive liquid was prepared by adding 10 vol% of water to a forcedly-deteriorated gasoline which had been left at 100°C for 24 hours in a pressure vessel. A corrosion test was conducted in which a coating steel sheet that was formed with draw-bead (reduction rate of sheet thickness of 14% and 30 x 35 mm of edge and rear face seals) was corroded at 45°C for three weeks in 350 ml of the corrosive liquid, and then the kinds and elution amounts of metal ions eluted in the corrosion test were measured. The case in which the elution amount of metal ions was less than 200 ppm in terms of the total amount of metal was evaluated as a good result.

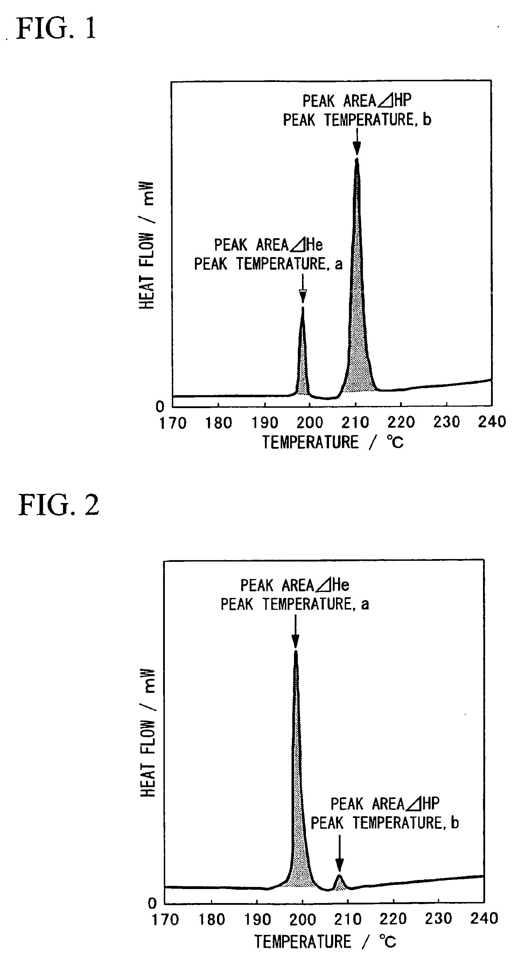

FIG 1 shows a differential scanning calorimetric curve for Sample No. 1. Table 1 shows the obtained results of evaluation. Reference Examples of Samples Nos. 1 to 5 shown in Table 1 have durability sufficient to be used. Samples Nos. 1 to 3 are samples prepared to examine the effect of cooling rate. Although the endothermic value ratio decreased (that is, Sn primary crystals decreased) with increase of cooling rate, Sample No. 3 was at a level of practical use. Comparative Example of Sample No. 6 was low in its content of Zn (mass %), and thus, a sufficient sacrificial corrosion resistance effect was not obtained and corrosion resistance of its outer surface was somewhat deteriorated. Comparative Examples Nos. 7 and 8 were high in their contents of Zn (mass %), low in their endothermic value ratio, and Sn primary crystals did not appear. Since Zn segregation at the eutectic crystal cell grain boundary and growth of coarse Zn crystals were promoted, corrosion resistance of the inner and outer surfaces of the fuel tanks deteriorated.

Here, the result of comprehensive evaluation on each sample was indicated as follows:

A : Good, excellent corrosion resistance
B : Fair, usable
C : Bad, unusable

Table 1

| Example | Sample No. | Coating composition | Cooling rate (°C/s) | Coating layer | | | | | Outer surface corrosion resistance | Inner surface corrosion resistance | Comprehensive evaluation | Remarks |
|---|---|---|---|---|---|---|---|---|---|---|---|---|
| | | | | Endotherm generated by Sn-Zn eutectic crystals melting | | Endotherm generated by Sn primary crystals melting | | Endothermic value ratio $\Delta Hp/(\Delta Hp+\Delta He)$ | Red rust area ratio (%) | Elution amount of metal (ppm) | | |
| | | | | Endothermic temperature (°C) | Endothermic value $\Delta He$ (J/g) | Endothermic temperature (°C) | Endothermic value $\Delta Hp$ (J/g) | | | | | |
| 1 | 1 | Sn-8 mass% of Zn | 15 | 199 | 0.11 | 211 | 0.47 | 0.81 | 2 | 35 | A | Reference Example |
| | 2 | Sn-8 mass% of Zn | 25 | 199 | 0.26 | 208 | 0.67 | 0.72 | 5 | 70 | A | Reference Example |
| | 3 | Sn-8 mass% of Zn | 35 | 199 | 0.5 | 203 | 0.31 | 0.38 | 8 | 160 | B | Reference Example |
| | 4 | Sn-4 mass% of Zn | 15 | 199 | 0.06 | 217 | 0.6 | 0.91 | 7 | 25 | A | Reference Example |
| | 5 | Sn-2 mass% of Zn | 15 | 199 | 0.01 | 224 | 0.44 | 0.98 | 9 | 10 | B | Reference Example |
| | 6 | Sn-0.5 mass% of Zn | 15 | 199 | 0.005 | 231 | 0.95 | 0.99 | 30 | 40 | C | Comparative Example |
| | 7 | Sn-10 mass% of Zn | 15 | 199 | 0.15 | - | - | - | 15 | 600 | C | Comparative Example |
| | 8 | Sn-15 mass% of Zn | 15 | 199 | 0.18 | - | - | - | 12 | 1300 | C | Comparative Example |
| 2 | 9 | Sn-8 mass% of Zn | 15 | 199 | 0.14 | 211 | 0.31 | 0.69 | 0 | 15 | A | Reference Example |

EP 1 905 859 B1

(Example 2) (outside the scope of the invention)

A 0.8 mm thick cold rolled steel sheet with roughness of 1.5 $\mu$m in RMS given by a work roll was used. After rolling oil of the steel sheet was removed by heat using a Sendzimir method, a surface of the steel sheet was deoxidized, and then the steel sheet was introduced in a Sn-8 mass% of Zn coating bath at 300°C. RMS used herein means root mean square roughness obtained by dividing an integral value of the square of a roughness curve in any interval by an interval length, and calculating a square root of the divided value.

After reacting the coating bath with the surface of the steel sheet for 3 seconds, the steel sheet was drawn out of the coating bath, and then, the coating weight (overall coating weight of Sn-Zn) was controlled to be 40 g/m$^2$ (per single surface side) using a gas wiping method.

The obtained results of evaluation are shown in Table 1. As shown in Sample No. 9 in Table 1, it was confirmed that Sn primary crystals were sufficiently grown. Corrosion resistance of the outer surface of a fuel tank in a salt-damaged environment was good without red rust although white rust occurred after SST960 hours. Corrosion resistance of the inner surface of the fuel tank was also good while a very small amount of Zn of the coating layer was eluted as eluted metal ions, and the elution amount was 15 ppm.

(Example 3) (outside the scope of the invention)

0.8 mm thick annealed and tempered steel sheets were smoothly and uniformly coated with 0.5 g/m$^2$ of Ni (with 50°C of bath temperature and 10A/dm$^2$ of a current density per single surface side) using a Watt's bath (240 g/L of nickel sulfate, 45 g/L of nickel chloride, and 30 g/L of boric acid, and pH = 4.0) by an electroplating method. Then, these steel sheet were coated with coating flux containing zinc chloride, ammonium chloride and hydrochloric acid and then were introduced into a Sn-Zn hot-dip coating baths at 280°C. After reacting the coating bath with a surface of the steel sheet for 5 seconds, the steel sheets were drawn out of the coating baths, and then, the coating weight (overall coating weight of Sn + Zn) was controlled to be 40 g/m$^2$ (per single surface side) using a gas wiping method.

FIG 2 shows a differential scanning calorimetric curve for Sample No. 10. Table 2 shows the obtained results of evaluation. Sample No. 10 in Table 2 had mostly Sn-Zn eutectic crystals while little Sn primary crystals were crystallized out. It was recognized that this sample had Zn segregation at eutectic crystal cell grain boundary through observation by an optical microscope. With regard to corrosion resistance of the outer surface of a fuel tank, the area ratio of red rust occurring after SST960 hours was 80%, and a plurality of pitting corrosion occurred. With regard to corrosion resistance of the inner surface of the fuel tank, Zn and Fe were eluted as eluted metal ions, and the elution amount was 1800 ppm, and pitting corrosion occurred. In comparison with Sample No. 10, Samples Nos. 11 to 13 had a little higher ratio of endothermic value of melting heat generated by Sn primary crystals, but not exceeding 0.3, and corrosion resistance was not so improved.

Table 2

| Example | Sample No. | Coating composition | Cooling rate (°C/s) | Coating layer | | | | | Outer surface corrosion resistance | Inner surface corrosion resistance | Comprehensive evaluation | Remarks |
|---|---|---|---|---|---|---|---|---|---|---|---|---|
| | | | | Endortherm generated by Sn-Zn eutectic crystals melting | | Endortherm generated by Sn primary crystals melting | | Endothermic value ratio $\Delta Hp/(\Delta Hp+\Delta He)$ | Red rust area ratio (%) | Elution amount of metal (ppm) | | |
| | | | | Endothermic temperature (°C) | Endothermic value $\Delta He$ (J/g) | Endothermic temperature (°C) | Endothermic value $\Delta Hp$ (J/g) | | | | | |
| 3 | 10 | Sn-8 mass % of Zn | 15 | 199 | 0.98 | 207 | 0.054 | 0.05 | 80 | 1800 | C | Comparative Example |
| | 11 | Sn-7 mass% of Zn | 15 | 199 | 0.89 | 209 | 0.13 | 0.13 | 60 | 900 | C | Comparative Example |
| | 12 | Sn-6 mass% of Zn | 15 | 199 | 0.78 | 210 | 0.19 | 0.2 | 25 | 400 | C | Comparative Example |
| | 13 | Sn-5 mass% of Zn | 15 | 199 | 0.71 | 211 | 0.24 | 0.25 | 15 | 150 | C | Comparative Example |

EP 1 905 859 B1

(Example 4)

A 0.8 mm thick annealed and tempered steel sheets were coated with 1.0 g/m$^2$ of Ni-Ni alloy having various compositions (with 50°C of bath temperature and 10A/dm$^2$ of a current density per single surface side) using Fe-Ni coating baths (240 g/L of nickel sulfate, 30 g/L of nickel chloride, 30 g/L of boric acid, (15), 30, 50, 100, 150, 200 and (250) g/L of iron sulfate, and pH = 2.5) by an electroplating method. Then, these steel sheet were coated with coating flux containing zinc chloride, ammonium chloride and hydrochloric acid, and then were introduced into Sn-Zn hot-dip coating baths having various compositions at 250, 300, 350, and 400°C. After reacting the coating bath with a surface of the steel sheet for 2, 5, 10,15 and 20 seconds, the steel sheets were drawn out of the coating baths, and then, the coating weight (overall coating weight of Sn+Zn) was controlled to be 40 g/m$^2$ (per single surface side) using a gas wiping method. Tables 3 and 4 show the results of evaluation.

Table 3

| Sample No. | Pre Fe-Ni composition | Coating composition | Coating bath temperature (°C) | Coating immersion time (s) | Cooling rate (°C/s) | Coating layer | | | | | Outer surface corrosion resistance | Inner surface corrosion resistance | Comprehensive evaluation | Remarks |
|---|---|---|---|---|---|---|---|---|---|---|---|---|---|---|
| | | | | | | Endortherm generated by Sn-Zn eutectic crystals melting | | Endortherm generated by Sn primary crystals melting | | Endothermic value ratio $\Delta Hp/(\Delta Hp+\Delta He)$ | Red rust area ratio (%) | Elution amount of metal (ppm) | | |
| | | | | | | Endothermic temperature (°C) | Endothermic value $\Delta He$ (J/g) | Endothermic temperature (°C) | Endothermic value $\Delta Hp$ (J/g) | | | | | |
| 14 | Fe-5 mass% Ni | Sn-8 mass% Zn | 300 | 5 | 15 | 199 | 0.24 | 208 | 0.1 | 0.29 | 11 | 180 | B | Comparative Example |
| 15 | Fe-10 mass% Ni | Sn-8 mass% Zn | 300 | 5 | 15 | 199 | 0.18 | 208 | 0.32 | 0.64 | 8 | 90 | A | Inventive Example |
| 16 | Fe-20 mass% Ni | Sn-8 mass% Zn | 300 | 5 | 15 | 199 | 0.11 | 211 | 0.47 | 0.81 | 1.5 | 25 | A | Inventive Example |
| 17 | Fe-40 mass% Ni | Sn-8 mass% Zn | 300 | 5 | 15 | 199 | 0.13 | 211 | 0.42 | 0.76 | 3 | 40 | A | Inventive Example |
| 18 | Fe-60 mass% Ni | Sn-8 mass% Zn | 300 | 5 | 15 | 199 | 0.34 | 210 | 0.4 | 0.54 | 5 | 50 | A | Inventive Example |
| 19 | Fe-80 mass% Ni | Sn-8 mass% Zn | 300 | 5 | 15 | 199 | 0.41 | 210 | 0.25 | 0.38 | 8 | 90 | A | Inventive Example |
| 20 | Fe-90 mass% Ni | Sn-8 mass% Zn | 300 | 5 | 15 | 199 | 0.24 | 209 | 0.08 | 0.25 | 25 | 450 | C | Comparative Example |
| 21 | Fe-20 mass% Ni | Sn-0.5 mass% Zn | 300 | 5 | 15 | 199 | 0.01 | 231 | 0.95 | 0.99 | 30 | 40 | C | Comparative Example |
| 22 | Fe-20 mass% Ni | Sn-2 mass% Zn | 300 | 5 | 15 | 198 | 0.01 | 224 | 0.44 | 0.98 | 12 | 10 | B | Inventive Example |
| 23 | Fe-20 mass% Ni | Sn-4 mass% Zn | 300 | 5 | 15 | 199 | 0.06 | 217 | 0.6 | 0.91 | 7 | 25 | A | Inventive Example |

Table 4

| Sample No. | Pre Fe-Ni composition | Coating composition | Coating bath temperature (°C) | Coating immersion time (s) | Cooling rate (°C/s) | Coating layer | | | | | Outer surface corrosion resistance Red rust area ratio (%) | Inner surface corrosion resistance Elution amount of metal (ppm) | Comprehensive evaluation | Remarks |
|---|---|---|---|---|---|---|---|---|---|---|---|---|---|---|
| | | | | | | Endotherm generated by Sn-Zn eutectic crystals melting | | Endotherm generated by Sn primary crystals melting | | Endothermic value ratio ΔHp/(ΔHp+ΔHe) | | | | |
| | | | | | | Endothermic temperature (°C) | Endothermic value ΔHe (J/g) | Endothermic temperature (°C) | Endothermic value ΔHp (J/g) | | | | | |
| 24 | Fe-20 mass% Ni | Sn-10 mass% Zn | 300 | 5 | 15 | 199 | 0.12 | - | - | - | 15 | 600 | C | Comparative Example |
| 25 | Fe-20 mass% Ni | Sn-8 mass% Zn | 250 | 5 | 15 | 199 | 0.11 | 212 | 0.47 | 0.81 | 2 | 35 | A | Inventive Example |
| 26 | Fe-20 mass% Ni | Sn-8 mass% Zn | 350 | 5 | 15 | 199 | 0.11 | 211 | 0.48 | 0.82 | 2 | 40 | A | Inventive Example |
| | | | | | | | | | | | | | | |
| 27 | Fe-20 mass% Ni | Sn-8 mass% Zn | 300 | 2 | 15 | 199 | 0.10 | 210 | 0.47 | 0.82 | 2 | 25 | A | Inventive Example |
| 28 | Fe-20 mass% Ni | Sn-8 mass% Zn | 300 | 10 | 15 | 199 | 0.11 | 211 | 0.45 | 0.81 | 4 | 45 | A | Inventive Example |
| 29 | Fe-20 mass% Ni | Sn-8 mass% Zn | 300 | 15 | 15 | 199 | 0.11 | 211 | 0.43 | 0.8 | 2 | 35 | A | Inventive Example |
| | | | | | | | | | | | | | | |
| 30 | Fe-20 mass% Ni | Sn-8 mass% Zn | 300 | 5 | 25 | 199 | 0.26 | 208 | 0.67 | 0.72 | 5 | 70 | A | Inventive Example |
| 31 | Fe-20 mass% Ni | Sn-8 mass% Zn | 300 | 5 | 30 | 199 | 0.51 | 203 | 0.31 | 0.38 | 9 | 140 | B | Inventive Example |

Samples Nos. 14 to 20 were prepared to examine the effect of a pre Fe-Ni composition. In Fe-10 mass % of Ni to Fe-80 mass % of Ni of Samples Nos. 15 to 19, Sn primary crystals were sufficiently generated and the endothermic value ratio was 0.3 or higher, and showed excellent corrosion resistance. However, in Samples Nos. 14 and 20 with the compositions biased to either Fe or Ni, Sn primary crystals were insufficiently generated and the endothermic value ratio was lower than 0.3, and showed poor corrosion resistance.

Samples Nos. 21 to 24 were prepared to examine the effect of a Sn-Zn composition. Since Sample No. 21 had an insufficient amount ofZn, sacrificial corrosion capability was insufficient, and showed poor outer surface corrosion resistance. On the other hand, since Sample No. 24 had an excessive amount of Zn, the elution amount of metal became remarkably large. Samples Nos. 22 and 23 had sacrificial corrosion resistance capability, suppressed excessive elution of Zn, and showed balanced excellent corrosion resistance.

Samples Nos. 25 and 26 were prepared to examine the effect of temperature of the hot-dip coating bath, and Samples Nos. 27 to 29 were prepared to examine the effect of the hot-dip coating immersion time. All these samples showed good results while having little effect on the endothermic value ratio in practical use ranges.

Samples Nos. 30 and 31 were prepared to examine the effect of the cooling rate. Although the endothermic value ratio decreased (that is, Sn primary crystals decreased) with an increase of the cooling rate, even Sample No. 31 was at a level of practical use.

The hot-dip Sn-Zn system coated steel sheet of the present invention has excellent corrosion resistance, formability and weldability and further long-term durability against deteriorated gasoline and the like. Accordingly, the hot-dip Sn-Zn system coated steel sheet is useful over a wide range including materials for fuel tanks without using Pb, and the like.

## Claims

1. A method for manufacturing a hot-dip Sn-Zn system coated steel sheet, comprising:

   pre-coating a Fe-Ni alloy containing 10 to 80 mass % of Ni and a remainder being Fe on a steel sheet;
   immersing the steel sheet into a Sn-Zn hot-dip coating bath under conditions where the hot-dip coating bath temperature is in a range of 240 to 300°C and the immersion time is in a range of 2 to 15 seconds so as to form a hot-dip coating layer which contains 1 to 8.8 mass % of Zn and a remainder including 91.2 to 99.0 mass % of Sn and inevitable impurities on a surface of the steel sheet;
   cooling the hot-dip coating layer at a cooling rate of 10°C/sec to 30°C/sec so as to obtain a hot-dip Sn-Zn system coated steel sheet; and
   measuring a differential scanning calorimetric curve of the hot-dip Sn-Zn system coated steel sheet by a differential scanning calorimetry, **characterized in that** the method further comprises
   distinguishing whether the hot-dip coating layer has an objective microstructure or not by the obtained differential scanning calorimetric curve,
   wherein the objective microstructure satisfies the following formula (1),

   $$\text{(endothermic value of melting heat generated by Sn primary crystals)} / \{\text{(endothermic value of melting heat generated by Sn primary crystals)} + \text{(endothermic value of melting heat generated by Sn-Zn eutectic crystals)}\} \geq 0.3 \quad \cdots (1),$$

   the objective microstructure has properties that a temperature of an endothermic peak generated by the Sn primary crystals melting is 200°C or higher and 230°C or lower, and a temperature of an endothermic peak generated by the Sn-Zn eutectic crystals melting is 198°C or higher and lower than 200°C.

2. A method for manufacturing a hot-dip Sn-Zn system coated steel sheet according to claim 1, wherein the hot-dip coating layer contains 4 to 8.8 mass % of Zn and a remainder including 91.2 to 96.0 mass % of Sn and inevitable impurities.

3. A hot-dip Sn-Zn system coated steel sheet, comprising:

   a steel sheet; and
   a hot-dip coating layer which is formed on a surface of the steel sheet and contains 1 to 8.8 mass % of Zn and a remainder including 91.2 to 99.0 mass % of Sn and inevitable impurities,
**characterized in that** the hot-dip Sn-Zn system coated steel sheet is manufactured by the method for manufacturing a hot-dip Sn-Zn system coated steel sheet according to claim 1,
wherein a ratio of an endothermic value of melting heat generated by Sn-Zn eutectic crystals and an endothermic value of melting heat generated by Sn primary crystals in the hot-dip coating layer satisfies the following formula (1),

$$\text{(endothermic value of melting heat generated by Sn primary crystals)} / \{\text{(endothermic value of melting heat generated by Sn primary crystals)} + \text{(endothermic value of melting heat generated by Sn-Zn eutectic crystals)}\} \geq 0.3 \cdots (1),$$

a temperature of an endothermic peak generated by the Sn primary crystals melting is 200°C or higher and 230°C or lower, and a temperature of an endothermic peak generated by the Sn-Zn eutectic crystals melting is 198°C or higher and lower than 200°C.

4. A hot-dip Sn-Zn system coated steel sheet according to claim 3, wherein the hot-dip coating layer contains 4 to 8.8 mass % of Zn and a remainder including 91.2 to 96.0 mass % of Sn and inevitable impurities.

**Patentansprüche**

1. Verfahren zur Herstellung eines durch Heißtauchen mit einem Sn-Zn-System beschichteten Stahlblechs, das aufweist:

Vorbeschichten eines Stahlblechs mit einer Fe-Ni-Legierung, die 10 bis 80 Masse-% Ni enthält und als Rest aus Fe besteht;
Eintauchen des Stahlblechs in ein Sn-Zn-Heißtauchbeschichtungsbad unter Bedingungen, bei denen die Temperatur des Heißtauchbeschichtungsbads in einem Bereich von 240 bis 300 °C liegt und die Eintauchzeit in einem Bereich von 2 bis 15 Sekunden liegt, um eine Heißtauchschicht, die 1 bis 8,8 Masse-% Zn enthält und als Rest 91,2 bis 99,0 Masse-% Sn und unvermeidliche Verunreinigungen aufweist, auf einer Oberfläche des Stahlblechs zu bilden;
Abkühlen der Heißtauchschicht mit einer Abkühlungsgeschwindigkeit von 10 °C/s bis 30 °C/s, um ein durch Heißtauchen mit einem Sn-Zn-System beschichtetes Stahlblech zu erhalten; und
Messen einer kalorimetrischen Differenzial-Scanning-Kurve des durch Heißtauchen mit einem Sn-Zn-System beschichteten Stahlblechs durch Differenzial-Scanning-Kalorimetrie, **dadurch gekennzeichnet, dass** das Verfahren ferner aufweist:

Unterscheiden anhand der erhaltenen kalorimetrischen Differenzial-Scanning-Kurve, ob die Heißtauchschicht eine objektive Mikrostruktur hat oder nicht,
wobei die objektive Mikrostruktur die folgende Formel (1) erfüllt:

```
(endothermer Wert von Schmelzwärme, die durch Sn-Primär-
kristalle erzeugt wird)/{(endothermer Wert von Schmelz-
wärme, die durch Sn-Primärkristalle erzeugt wird) + (en-
dothermer Wert von Schmelzwärme, die durch eutektische
Sn-Zn-Kristalle erzeugt wird)} ≥ 0,3          (1),
```

die objektive Mikrostruktur Eigenschaften hat, dass eine Temperatur eines durch Schmelzen der Sn-Primärkristalle erzeugten endothermen Peaks mindestens 200 °C und höchstens 230 °C ist und eine Temperatur eines durch Schmelzen der eutektischen Sn-Zn-Kristalle erzeugten endothermen Peaks mindestens 198 °C und kleiner als 200 °C ist.

2.  Verfahren zur Herstellung eines durch Heißtauchen mit einem Sn-Zn-System beschichteten Stahlblechs nach Anspruch 1, wobei die Heißtauchschicht 4 bis 8,8 Masse-% Zn enthält und als Rest 91,2 bis 96,0 Masse-% Sn und unvermeidliche Verunreinigungen aufweist.

3.  Durch Heißtauchen mit einem Sn-Zn-System beschichtetes Stahlblech, das aufweist:

ein Stahlblech; und
eine Heißtauchschicht, die auf einer Oberfläche des Stahlblechs gebildet ist, 1 bis 8,8 Masse-% Zn enthält und als Rest 91,2 bis 99,0 Masse-% Sn und unvermeidliche Verunreinigungen aufweist,
**dadurch gekennzeichnet, dass** das durch Heißtauchen mit einem Sn-Zn-System beschichtete Stahlblech durch das Verfahren zur Herstellung eines durch Heißtauchen mit einem Sn-Zn-System beschichteten Stahlblechs nach Anspruch 1 hergestellt ist,
wobei ein Verhältnis eines endothermen Werts von Schmelzwärme, die durch eutektische Sn-Zn-Kristalle erzeugt wird, und eines endothermen Werts von Schmelzwärme, die durch Sn-Primärkristalle in der Heißtauchschicht erzeugt wird, die folgende Formel (1) erfüllt:

```
(endothermer Wert von Schmelzwärme, die durch Sn-Primär-
kristalle erzeugt wird)/{(endothermer Wert von Schmelz-
wärme, die durch Sn-Primärkristalle erzeugt wird) + (en-
dothermer Wert von Schmelzwärme, die durch eutektische
Sn-Zn-Kristalle erzeugt wird)} ≥ 0,3          (1),
```

und eine Temperatur eines durch Schmelzen der Sn-Primärkristalle erzeugten endothermen Peaks mindestens 200 °C und höchstens 230 °C ist und eine Temperatur eines durch Schmelzen der eutektischen Sn-Zn-Kristalle erzeugten endothermen Peaks mindestens 198 °C und kleiner als 200 °C ist.

4.  Durch Heißtauchen mit einem Sn-Zn-System beschichtetes Stahlblech nach Anspruch 3,
wobei die Heißtauchschicht 4 bis 8,8 Masse-% Zn enthält und als Rest 91,2 bis 96,0 Masse-% Sn und unvermeidliche Verunreinigungen aufweist.


**Revendications**

1.  Procédé de fabrication d'une feuille en acier revêtue d'un système Sn-Zn d'immersion à chaud, comprenant :

le pré-revêtement d'un alliage de Fe-Ni contenant de 10 à 80 % en masse de Ni et le reste étant Fe sur une feuille en acier ;
l'immersion de la feuille en acier dans un bain de revêtement d'immersion à chaud de Sn-Zn dans des conditions dans lesquelles la température du bain de revêtement d'immersion à chaud se trouve dans un intervalle de 240 à 300°C et la durée d'immersion se trouve dans un intervalle de 2 à 15 secondes afin de former une couche de revêtement d'immersion à chaud qui contient de 1 à 8,8 % en masse de Zn et le reste comprenant de 91,2 à 99,0 % en masse de Sn et des impuretés inévitables sur une surface de la feuille en acier ;
le refroidissement de la couche de revêtement d'immersion à chaud à une vitesse de refroidissement de 10°C/s à 30°C/s afin d'obtenir une feuille en acier revêtue d'un système Sn-Zn d'immersion à chaud ; et
la mesure d'une courbe calorimétrique de balayage de balayage différentielle de la feuille en acier revêtue d'un système Sn-Zn d'immersion à chaud par un calorimétrie différentiel, **caractérisé en ce que** le procédé comprend de plus
la distinction du fait que la couche de revêtement d'immersion à chaud présente une microstructure ciblée ou non par la courbe calorimétrique de balayage différentielle obtenue,
dans lequel la microstructure ciblée satisfait la formule (1) suivante,

(valeur endothermique de la chaleur de fusion produite par des cristaux primaires de Sn)/{(valeur endothermique de la chaleur de fusion produite par des cristaux primaires de Sn) + (valeur endothermique de la chaleur de fusion produite par des cristaux eutectiques de Sn-Zn)} $\geq$ 0,3...(1),

la microstructure ciblée présente des propriétés telles qu'une température d'un pic endothermique produit par la fusion des cristaux primaires de Sn est de 200°C ou supérieure et de 230°C ou inférieure, et une température d'un pic endothermique produit par la fusion des cristaux eutectiques de Sn-Zn est de 198°C ou supérieure et inférieure à 200°C.

2. Procédé de fabrication d'une feuille en acier revêtue d'un système Sn-Zn d'immersion à chaud selon la revendication 1, dans lequel la couche de revêtement d'immersion à chaud contient de 4 à 8,8 % en masse de Zn et le reste comprenant de 91,2 à 96,0 % en masse de Sn et des impuretés inévitables.

3. Feuille en acier revêtue d'un système Sn-Zn d'immersion à chaud comprenant :

une feuille en acier ; et
une couche de revêtement d'immersion à chaud qui est formée sur une surface de la feuille en acier et qui contient de 1 à 8,8 % en masse de Zn et le reste comprenant de 91,2 à 99,0 % en masse de Sn et des impuretés inévitables,
**caractérisée en ce que** la feuille en acier revêtue d'un système Sn-Zn d'immersion à chaud est fabriquée par le procédé de fabrication d'une feuille en acier revêtue d'un système Sn-Zn d'immersion à chaud selon la revendication 1,
dans laquelle un rapport d'une valeur endothermique d'une chaleur de fusion produite par des cristaux eutectiques de Sn-Zn et d'une valeur endothermique de chaleur de fusion produite par des cristaux primaires de Sn dans la couche de revêtement d'immersion à chaud satisfait la formule (1) suivante,

(valeur endothermique de la chaleur de fusion produite par des cristaux primaires de Sn)/{(valeur endothermique de la chaleur de fusion produite par des cristaux primaires de Sn) + (valeur endothermique de la chaleur de fusion produite par des cristaux eutectiques de Sn-Zn)} $\geq$ 0,3...(1),

une température d'un pic endothermique produit par la fusion des cristaux primaires de Sn est de 200°C ou supérieure et de 230°C ou inférieure, et une température d'un pic endothermique produit par la fusion des cristaux eutectiques de Sn-Zn est de 198°C ou supérieure et inférieure à 200°C.

4. Feuille en acier revêtue d'un système de Sn-Zn d'immersion à chaud selon la revendication 3, dans laquelle la couche de revêtement d'immersion à chaud contient de 4 à 8,8 % en masse de Zn et le reste comprenant de 91,2 à 96,0 % en masse de Sn et des impuretés inévitables.

## FIG. 1

## FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S52130438 B
- JP 3126622 B
- JP 3126623 B
- WO 9630560 A

**Non-patent literature cited in the description**

- **Kwang-Lung Lin et al.** *J. Mater. Res.,* September 2003, vol. 18 (9), 2203-2207